# EUROPÄISCHE PATENTSCHRIFT

(11) **EP 3 582 050 B1**
(45) Veröffentlichungstag und Bekanntmachung des Hinweises auf die Patenterteilung: **28.04.2021**
(21) Anmeldenummer: 18177160.1
(22) Anmeldetag: 12.06.2018
(51) Int. Cl.: G05B 23/02

(54) **VERFAHREN ZUM ANALYSIEREN EINER URSACHE MINDESTENS EINER ABWEICHUNG**
METHOD FOR ANALYSING A CAUSE OF AT LEAST ONE DEVIATION
PROCÉDÉ D'ANALYSE D'UNE CAUSE D'AU MOINS UN ÉCART

(43) Veröffentlichungstag der Anmeldung: 18.12.2019
(73) Patentinhaber: Siemens Aktiengesellschaft, 80333 München (DE)
(72) Erfinder: Bischoff, Martin, 85653 Aying, Großhelfendorf (DE)

(56) Entgegenhaltungen:
- WO-A1-2017/139046
- WO-A2-2006/003449
- DE-A1-102016 203 676
- DE-T2- 69 112 353

## Beschreibung

### 1. Technisches Gebiet

Die Erfindung betrifft ein computer-implementiertes Verfahren zum Analysieren einer Ursache mindestens einer Abweichung. Ferner ist die Erfindung auf eine entsprechende autonome Einheit und ein Computerprogrammprodukt gerichtet. Die Erfindung kann insbesondere in den technischen Bereichen der Automatisierungstechnik und Robotik eingesetzt werden.

### 2. Stand der Technik

Die Fehlerursachenanalyse ("root cause analysis") gewinnt in der Automatisierungstechnik und Robotik zunehmend an Bedeutung. Die Fehlerursachenanalyse ist darauf gerichtet, die Ursache einer Abweichung zu identifizieren und zu analysieren. Die Abweichung kann beispielsweise ein Fehler, eine Ausnahme, eine Abnormalität, eine Störung, ein auffälliges bzw. unerwartetes Verhalten, ein Problem oder ein Unfall sein. Beispielsweise spielt die Fehlerursachenanalyse in Automatisierungsanlagen, wie Fertigungs-Produktionsanlagen oder Fertigungsstraßen, und Robotik-Systemen eine entscheidende Rolle.

Beispielsweise kann bei einem Arbeitsablauf eines Industrieroboters ein Fehler auftreten. Der Fehler kann dabei durch den Industrieroboter oder durch die Umwelt verursacht werden. Bezugnehmend auf den Industrieroboter kann ein Greifer an einem Roboterarm ein Objekt halten. Bei einer Bewegung fällt das Objekt herunter. Hierfür kann es unterschiedliche Ursachen geben, beispielsweise ist das Objekt bei der Bewegung an ein Hindernis gestoßen, hat das Objekt eine geringere Reibung und ist deshalb aus dem Greifer geglitten, hielt der Greifer das Objekt nicht in der richtigen Position, da die Sensoren fehlerhafte Daten liefern oder hielt der Greifer das Objekt mit zu geringer Kraft, etwa da die Maximalkraft der Aktuatoren des Greifers dafür nicht ausreicht.

Gemäß dem Stand der Technik erfolgt die Fehlerursachenanalyse manuell. Die Fehlerursachenanalyse ist dadurch jedoch aufwendig und komplex. Weiterhin sind Test- und Wartungsansätze bekannt, um das Identifizieren der Fehlerursache für die Experten zu erleichtern. Herkömmliche Ansätze sind u.a. das "Logging" und das "Remote Monitoring". Das Logging ist das Protokollieren e.g. von Systemzuständen und Messdaten aus der Umwelt. Das Remote Monitoring ist die externe Überwachung der Anlage oder des Systems, wie Industrieroboter.

Beispielsweise kann der obige Industrieroboter mittels dieser Ansätze in Sekundenintervallen die Stellungen jedes Gelenks und die Position des Greifers im Raum speichern. Die Messdaten der Drucksensoren an dem Greifer werden ebenfalls gespeichert. Anhand dieser Daten kann bestimmt werden, mit welcher Kraft ein Objekt gehalten wird. Zusätzlich kann eine Stereokamera am Arm montiert werden, mit der die Umwelt, das Objekt und die Hand gefilmt und als dreidimensionale Objekte im Raum rekonstruiert werden können. Mit solchen Daten steht den Experten eine gute Grundlage zur Fehlerursachenanalyse zur Verfügung, wie des obigen fallengelassenen Objekts.

Die bekannten Ansätze sind jedoch im Hinblick auf die zunehmende Automatisierung und Industrie 4.0 unzureichend, da sie zeitaufwendig und fehleraufwändig sind sowie Expertenwissen erfordern. Daher ist es wünschenswert eine autonome Einheit bereitzustellen, welche eigenständig die Fehlerursachenanalyse durchführt sowie darüber hinaus Gegenmaßnahmen ergreifen kann.

Die Druckschrift WO 2017/139046 A1 offenbart ein System und Verfahren zur nicht-überwachten Fehlerursachenanalyse ("Root cause analysis") von Maschinenfehlern. Falls ein Maschinenfehler identifiziert wird, dann wird zumindest ein Teil von Sensoreingaben, welche vor dem Fehler empfangen wurden, mittels unsupervised Machine Learning analysiert.

Die vorliegende Erfindung stellt sich daher die Aufgabe ein Verfahren für eine autonome Einheit bereitzustellen, welches effizient und zuverlässig eine Ursache mindestens einer Abweichung analysiert.

### 3. Zusammenfassung der Erfindung

Die oben genannte Aufgabe wird erfindungsgemäß durch ein Verfahren zum Analysieren einer Ursache mindestens einer Abweichung gemäß Anspruch 1 gelöst.

Das erfindungsgemäße Verfahren wird von einer autonomen Einheit gemäß Anspruch 12 durchgeführt. Der Begriff autonom steht für selbstständig, eigenständig, selbstbestimmt und unabhängig. Ein beispielhaftes autonomes System ist ein autonomes Fahrzeug. Unter autonomem Fahren ist die Fortbewegung von Fahrzeugen, mobilen Robotern und fahrerlosen Transportsystemen zu verstehen, die sich weitgehend autonom verhalten. Weitere Beispiele einer autonomen Einheit sind Robotereinheiten oder sonstige Automatisierungsanlageneinheiten.

Der Zustandsdatensatz umfasst Daten der autonomen Einheit, wie Systemzustand und/oder Daten der Umgebung der autonomen Einheit, wie Sensordaten oder Kameraaufnahmen.

Der zu analysierende Zustandsdatensatz ist derjenige Datensatz, welcher zum gegenwärtigen Zeitpunkt vorliegt. Mit anderen Worten, handelt es sich hierbei um den aktuellen Zustandsdatensatz. Der vorangegangene Zustandsdatensatz ist derjenige Datensatz, der dem zu analysierenden Zustandsdatensatz zeitlich vorangeht oder vorausgeht. Mit anderen Worten, handelt es sich hierbei um einen Zustandsdatensatz aus einem vergangenen Zeitpunkt.

Die autonome Einheit kann die Datensätze über eine oder mehrere Schnittstellen übertragen.

Der zu analysierende Zustandsdatensatz weist mindestens eine Abweichung auf. Die Abweichung entspricht einer Abweichung vom erwarteten Verhalten. Mit anderen Worten, weicht der Istzustand vom Sollzustand ab. Der Istzustand entspricht dem aktuellen Zustand oder Zustand der autonomen Einheit zum gegenwärtigen Zeitpunkt. Der Sollzustand entspricht dem Normalzustand oder dem erwarteten Verhalten. Die Abweichung kann insbesondere ein Fehler, eine Ausnahme, eine Abnormalität, eine Störung, ein auffälliges bzw. unerwartetes Verhalten, ein Problem oder ein Unfall der autonomen Einheit sein. Im Gegensatz dazu lag im vorangegangenen Zustandsdatensatz noch keine Abweichung vor.

Der mindestens eine simulierte Datensatz wird mit dem zu analysierenden Zustandsdatensatz verglichen und auf Ähnlichkeit hin überprüft. Die Zustandsdatensätze sind sich ähnlicher je geringer der Abstand zwischen ihnen ist. Der Abstand kann mittels eines Abstandsmaßes bzw. einer Metrik bestimmt werden.

Der mindestens eine simuliere Datensatz und/oder der mindestens eine alternative vorangegangene Zustandsdatensatz kann insbesondere als Ursache der mindestens einen Abweichung ausgegeben werden, falls der Ähnlichkeitswert hinreichend hoch ist, insbesondere einen vorbestimmten Grenzwert überschreitet.
Andernfalls kann die mindestens eine Fehlermeldung ausgegeben werden.

Der Vorteil liegt darin, dass die Fehlerursachenanalyse im Gegensatz zum Stand der Technik selbständig oder eigenständig durch die autonome Einheit durchgeführt wird. Dadurch kann Personal sowie Zeit eingespart werden. Folglich können die Kosten erheblich reduziert werden. Weiterhin ist die autonome Einheit vorteilhafterweise weniger fehleranfällig und somit zuverlässiger.

Weiterhin kann die autonome Einheit im Gegensatz zum Stand der Technik auch Ursachen von unerwarteten, noch nie dagewesenen Ereignissen ermitteln.

Weiterhin kann die autonome Einheit als ein weiterer Vorteil diese gewonnenen Daten sammeln, speichern und dadurch ein Erfahrungsschatz aufbauen. Dementsprechend wächst das Wissen und die autonome Einheit kann sich verbessern.

In einer Ausgestaltung wird der mindestens eine vorangegangene Zustandsdatensatz in einer Speichereinheit gespeichert. Dementsprechend kann die Speichereinheit als eine Datenbank, Cloud oder sonstige flüchtige, nichtflüchtige Speichereinheit ausgebildet sein, auf welche in effizienter und zuverlässiger Weise zugegriffen werden kann. Die Zustandsdatensätze können in regelmäßigen Zeitabständen oder Intervallen gespeichert werden, um die Verlässlichkeit sowie Vollständigkeit der Zustandsdatensätze und die Genauigkeit der erfindungsgemäßen Analyse zu verbessern.

In einer weiteren Ausgestaltung wird der Ähnlichkeitswert auf Basis einer Abstandsmetrik ermittelt, insbesondere euklidischer Abstand oder Manhattan-Metrik.

Dementsprechend können unterschiedliche Abstandsmetriken Anwendung finden. Die Abstandsmetrik wir dabei verwendet, um die Datensätze zu vergleichen und den Ähnlichkeitswert zu ermitteln. Im einfachsten Fall kann dies der euklidische Abstand sein. Ferner bietet sich auch eine Abstandsfunktion mit Gewichten an, um verschiedene Parametertypen in einer Abstandsfunktion miteinander zu vergleichen.

In einer weiteren Ausgestaltung ist die Simulation eine physikalische Simulation.

Dementsprechend können physikalische Simulationen Anwendung finden. Beispielhafte physikalische Simulationen sind Akustik-, Wärme-, Starrkörper, Fluid-, Verformungs-, Prozess- und Starrkörpersimulationen sowie Kombinationen davon (sog. Mehrdomänen-Simulationen) etc. Alternativ oder zusätzlich können andere Metriken oder Simulationen eingesetzt werden. Dadurch kann vorteilhaftweise abhängig von den Anwendungsgebieten oder anderen Bedingungen flexibel die Metrik oder Simulation angepasst werden.

In einer weiteren Ausgestaltung erfolgt das Ermitteln des mindestens einen alternativen vorangegangenen Zustandsdatensatzes durch das Variieren mindestens einen Variablen.

In einer weiteren Ausgestaltung erfolgt das Variieren der mindestens einen Variablen in mindestens einem Intervall.

Dementsprechend ist die Variable ein Parameter, eine Eigenschaft oder ein sonstiges anderes Kriterium. Mit anderen Worten, erfolgt eine Parametervariation. Beispielsweise wird eine Vielzahl ähnlicher Griff-Situationen für den beispielhaften Greifer erzeugt, welche sich in einer oder mehreren Variablen unterscheiden. Die Position und/oder Kraft kann variiert oder verändert werden. Dementsprechend ist die Variable die Position oder die Kraft. Die Variable kann in einem Intervall oder Bereich verändert werden.

In einer weiteren Ausgestaltung berücksichtigt das Variieren der mindestens einen Variablen eine Dichteverteilung.

Dementsprechend kann die Variation des Parameters entsprechend einer Dichteverteilung folgen. Damit werden beispielsweise Griff-Situationen mit geringeren Abweichungen häufiger generiert als Griff-Situationen mit großen Abweichungen. Dies ist vorteilhaft, da große Abweichungen unwahrscheinlicher sind.

In einer weiteren Ausgestaltung weist das Verfahren weiterhin das Behandeln der Ursache der mindestens einen Abweichung auf.

In einer weiteren Ausgestaltung umfasst das Behandeln der Ursache der mindestens einen Abweichung, das
- Übertragen der Ursache an eine andere Einheit; und/oder
- Durchführen einer Maßnahme.

In einer weiteren Ausgestaltung wird die Ursache in Form einer Nachricht oder Mitteilung übertragen.

In einer weiteren Ausgestaltung ist die Maßnahme eine Anpassung eine Anpassung oder Einstellung.

Dementsprechend wird das erfindungsgemäße Verfahren durch eine autonome Einheit durchgeführt. Zusätzlich zur Bestimmung der Fehlerursache kann die autonome Einheit die bestimmte oder identifizierte Ursache auch behandeln, um den Fehler zu beheben. Die autonome Einheit kann hierzu einen oder mehrere Schritte gleichzeitig oder nacheinander durchführen. Ferner kann die autonome Einheit auch stufenweise vorgehen. Sie kann die Ursache an eine andere Einheit, wie ein Endgerät, eine Steuereinheit oder sonstige Recheneinheit übermitteln, welche eine entsprechende Maßnahme ergreift. Alternativ oder zusätzlich kann die autonome Einheit auch selbst und nicht durch eine andere Einheit eine entsprechende Maßnahme einleiten. Dadurch kann der Fehler vorteilhafterweise effizient und zuverlässig behoben werden ohne eine weitere Komponente zu benötigen.

Ferner betrifft die Erfindung eine autonome Einheit zum Durchführen des obigen Verfahrens.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein schematisches Ablaufdiagramm des erfindungsgemäßen Verfahrens.

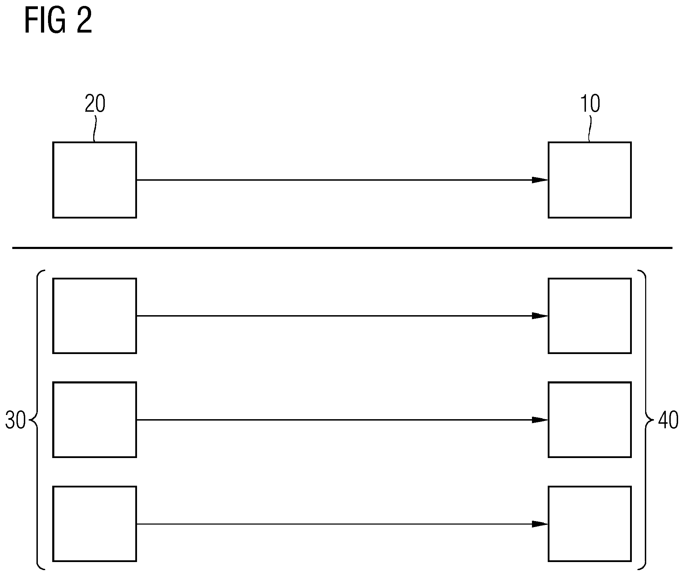

- FIG 2: zeigt die unterschiedlichen Zustandsdatensätze gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

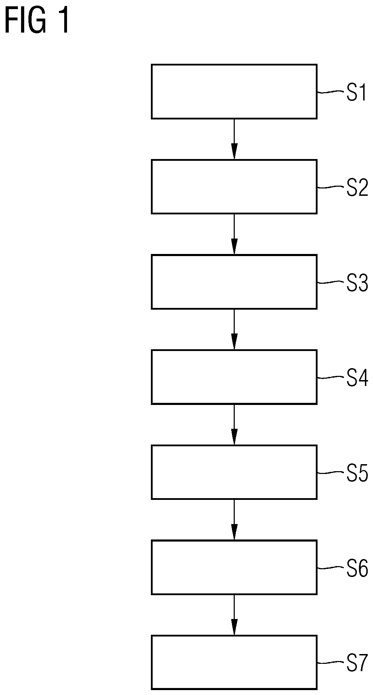

Figur 1 stellt ein Ablaufdiagramm des erfindungsgemäßen Verfahrens mit den Verfahrensschritten S1 bis S7 schematisch dar. Das Verfahren wird auf den zu analysierenden Zustandsdatensatz 10 angewendet, um die Ursache seiner Abweichung zu analysieren.

Gemäß Figur 1 wird in einem Schritt S2 die vergangene Situation rekonstruiert. Hierzu wird ein vorangegangener Zustandsdatensatz 20 aus einem vergangenen Zeitpunkt, in dem noch kein Fehler vorlag, abgerufen. Beispielsweise erkennt ein Robotik-System als autonome Einheit mittels einer Stereokamera und über Drucksensoren, dass ein Objekt aus einem Greifer gerutscht und auf den Boden gefallen ist. Das Robotik-System beginnt mit der Ursachenanalyse, indem es einen vorangegangenen Zustandsdatensatz lädt, zu dem das Objekt stabil vom Greifer gehalten wurde.

In einem weiteren Schritt S3 erfolgt eine Parametervariation. Die Zustandsdaten können Messfehlern unterliegen, können ungenau und möglicherweise sogar selbst fehlerhaft sein. Daher ist es möglich, dass in den aufgezeichneten Zustandsdaten bereits die Fehlerursache verborgen liegt und von der autonomen Einheit nicht detektiert wurde. Die vorangegangenen Zustandsdaten 20 werden in vorgegebenen Intervallen und Dichteverteilungen variiert. Auf diese Art wird eine Vielfalt von alternativen vorangegangenen Zustandsdatensätzen 30 generiert, die sehr ähnlich zu dem vorangegangenen Zustandsdatensatz 20 sind, jedoch im Detail unterschiedlich sind.

Bezugnehmend auf das obige Beispiel wird eine Vielzahl ähnlicher Griff-Situationen generiert, die sich alle entsprechend vorgegebener Parametervariationen in Details unterscheiden. Beispielsweise ist der Greifer an einer geringfügig anderen Position im Raum, ist das Objekt in einer etwas anderen Orientierung in dem Greifer, umschließt der Greifer das Objekt mit unterschiedlichen Kräften, sind mögliche Hindernisse im Raum an etwas anderen Positionen, als im ursprünglichen Zustandsdatensatz hinterlegt.

In einem weiteren Schritt S4 wird ausgehend von jedem einzelnen generierten alternativen vorangegangen Zustandsdatensatz 30 eine Simulation bis zum gegenwärtigen Zeitpunkt durchgeführt, an dem die Abweichung detektiert wurde. Hierbei werden je nach Anwendungsgebiet dedizierte Rechenoperationen angewendet, die beschreiben, wie sich der Systemzustand von Zeitpunkt zu Zeitpunkt weiterentwickelt. Folglich werden die bis zum gegenwärtigen Zeitpunkt simulierten Systemzustände als simulierte Datensätze 40 ermittelt. Dabei können unterschiedliche Simulationen je nach Anwendungsgebiet ausgewählt werden.

Beispielsweise sind beim Greifer besonders die mechanischen Kräfte ausschlaggebend. Dementsprechend hat sich eine physikalische Simulation als besonders vorteilhaft erwiesen. Für jede künstlich generierte Griff-Situation wird die Greifer -Bewegung entsprechend der Steuersignale und den physikalischen Gesetzen bis zum Zeitpunkt der Abweichung simuliert. In einem anderen Beispiel, etwa einer autonomen Kraftwerksteuerung, sind die Gesetze der Mechanik weniger relevant. Daher kann der Prozessablauf von einem Systemzustand zum nächsten Systemzustand durch Steuerungslogiken und chemische und/oder thermodynamische Prozesse beschrieben werden.

In einem weiteren Schritt S5 werden die simulierten Datensätze 40 mit dem zu analysierenden Zustandsdatensatz 10 verglichen. Der oder die Zustände, die dieselbe Abweichung wie der zu analysierende Zustandsdatensatz 10 aufweisen können gegebenenfalls nochmals genauer untersucht werden, beispielsweise durch weitere detaillierte Parametervariationen. Aus den simulierten Datensätzen 40 wird derjenige simulierte Datensatz bestimmt, der dem zu analysierenden Zustandsdatensatz 10 am ähnlichsten ist. Ferner ist auch der alternative vorangegangene Zustandsdatensatz bekannt, aus dem der simulierte Datensatz hervorgeht.

Beispielsweise hat der Greifer das Objekt in einigen simulierten Daten ebenfalls fallen gelassen. Eine Simulation zeichnet sich zum Beispiel dadurch aus, dass das Objekt zum selben Zeitpunkt, beim selben Steuersignal aus der Hand fiel bzw. am selben Punkt am Boden zum liegen gekommen ist. Der entsprechende alternative vorangegangene Zustandsdatensatz mit dem diese Simulation begann unterscheidet sich von dem zu analysierende Zustandsdatensatz aus der Vergangenheit besonders dadurch, dass das Objekt eine etwas andere Orientierung hatte.

In einem weiteren Schritt kann durch die Betrachtung der Unterschiede zwischen den alternativen vorangegangenen Zustandsdatensätzen und dem vorangegangenen Zustandsdatensatz auf die Fehlerursache geschlossen werden.

Mit anderen Worten können die alternativen vorangegangenen Zustandsdatensätze beim Vergleich der simulierten Daten mit dem zu analysierenden Zustandsdatensatz mitberücksichtigt werden. Je größer die Abweichung von einem alternativen vorangegangenen Zustand zu dem zu analysierenden Zustandsdatensatz, desto unwahrscheinlicher ist es, dass der alternative vorangegangene Zustandsdatensatz der tatsächliche vergangene Zustand war.

Beispielsweise unterscheidet sich der alternative vorangegangene Zustandsdatensatz von dem vorangegangenen Zustandsdatensatz durch die Orientierung. Hier liegt es nahe, dass das Objekt tatsächlich wie in dem alternativen vorangegangenen Zustandsdatensatz beschrieben vom Greifer erfasst wurde, und nicht wie im vorangegangenen Zustandsdatensatz angenommen. Folglich können beispielsweise Selbst-Tests der Sensoren durchgeführt werden. Alternativ oder zusätzlich können auch weitere vorangegangene Zustandsdatensätze weiter in der Vergangenheit untersucht werden, um zu bestimmen, ob das Objekt falsch aufgenommen wurde oder bereits während einer vorherigen Bewegung im Greifer verrutschte.

Die autonome Einheit kann anhand der gewonnenen Ergebnisse unterschiedliche Maßnahmen ergreifen, um die Ursache der Abweichung zu behandeln, wie beispielsweise: die Abweichung eigenständig beheben, einen Menschen oder eine andere Einheit alarmieren, sich selbst umprogrammieren, um in Zukunft solchen Abweichungen vorzubeugen, etwa häufiger überwachen, oder anders greifen und/oder die Abweichung als harmlos einstufen, da die Ursache jetzt bekannt ist und entsprechend kategorisiert werden kann.

## Patentansprüche

1. Verfahren für eine autonome Einheit der Automatisierungstechnik und Robotik zum Analysieren einer Ursache für mindestens eine Abweichung, aufweisend die Schritte:
a. Empfangen eines zu analysierenden Zustandsdatensatzes (10), welcher Daten der autonomen Einheit umfasst, aufweisend die mindestens eine Abweichung (S1);
b. Ermitteln mindestens eines vorangegangenen Zustandsdatensatzes (20, S2);
**gekennzeichnet durch**
c. Ermitteln einer Mehrzahl von alternativen vorangegangenen Zustandsdatensätze (30) auf Basis des mindestens einen vorangegangenen Zustandsdatensatzes (20, S3) ;
d. Ermitteln eines simulierten Datensatzes (40) durch Simulation des Zustandes der autonomen Einheit bis zum gegenwärtigen Zeitpunkt ausgehend von jedem der Mehrzahl der alternativen vorangegangenen Zustandsdatensätze (30, S4);
e. Vergleichen der simulierten Datensätze (40) mit dem zu analysierenden Zustandsdatensatz (10, S5) ;
f. Ermitteln eines Ähnlichkeitswertes zwischen jedem der simulierten Datensätze (40) und dem zu analysierenden Zustandsdatensatz (10, S6); und
g. Ausgeben des simulierten Datensatzes (40), der dem zu analysierenden Zustandsdatensatz am ähnlichsten ist, des alternativen vorangegangen Zustandsdatensatzes der Mehrzahl der alternativen vorangegangenen Zustandsdatensätze (30), aus dem der ausgegebene simulierte Datensatz hervorgeht, als Ursache der mindestens einen Abweichung oder mindestens einer Fehlermeldung in Abhängigkeit des Ähnlichkeitswertes (S7) .

2. Verfahren nach Anspruch 1, wobei der mindestens eine vorangegangene Zustandsdatensatz (20) in einer Speichereinheit gespeichert wird.

3. Verfahren nach Anspruch 1 oder Anspruch 2, wobei der Ähnlichkeitswert auf Basis einer Abstandsmetrik ermittelt wird, insbesondere euklidischer Abstand oder Manhattan-Metrik.

4. Verfahren nach einem der vorhergehenden Ansprüche, wobei die Simulation eine physikalische Simulation ist.

5. Verfahren nach einem der vorhergehenden Ansprüche, wobei das Ermitteln des mindestens einen alternativen vorangegangen Zustandsdatensatzes (30) durch das Variieren mindestens einer Variablen erfolgt.

6. Verfahren nach Anspruch 5, wobei das Variieren der mindestens einen Variablen in mindestens einem Intervall erfolgt.

7. Verfahren nach Anspruch 6, wobei das Variieren der mindestens einen Variablen eine Dichteverteilung berücksichtigt.

8. Verfahren nach einem der vorhergehenden Ansprüche, weiterhin aufweisend das Behandeln der Ursache der mindestens einen Abweichung.

9. Verfahren nach Anspruch 8, wobei das Behandeln der Ursache der mindestens einen Abweichung, das
- Übertragen der Ursache an eine andere Einheit; und/oder
- Durchführen einer Maßnahme umfasst.

10. Verfahren nach Anspruch 9, wobei die Ursache in Form einer Nachricht oder Mitteilung übertragen wird.

11. Verfahren nach Anspruch 9 oder Anspruch 10, wobei die Maßnahme eine Anpassung oder Einstellung ist.

12. Autonome Einheit der Automatisierungstechnik und Robotik, die zum Durchführen des Verfahrens nach einem der vorhergehenden Ansprüche ausgebildet ist.

13. Computerprogrammprodukt mit einem Computerprogramm, das Mittel zur Durchführung des Verfahrens nach einem der Ansprüche 1 bis 11 aufweist, wenn das Computerprogramm auf einer programmgesteuerten Einrichtung zur Ausführung gebracht wird.

## Claims

1. Method for an autonomous automation and robotics unit for analysing a cause of at least one deviation, having the steps of:
a. receiving a state data record (10) which is to be analysed and comprises data relating to the autonomous unit having the at least one deviation (S1);
b. determining at least one preceding state data record (20, S2) ;
**characterized by**
c. determining a plurality of alternative preceding state data records (30) on the basis of the at least one preceding state data record (20, S3);
d. determining a simulated data record (40) by simulating the state of the autonomous unit up to the present time starting from each of the plurality of alternative preceding state data records (30, S4);
e. comparing the simulated data records (40) with the state data record (10) to be analysed (S5);
f. determining a similarity value between the each of the simulated data records (40) and the state data record (10) to be analysed (S6); and
g. outputting the simulated data record (40), which is most similar to the state data record to be analysed, of the alternative preceding state data record of the plurality of alternative preceding state data records (30), from which the output simulated data record emerges, as the cause of the at least one deviation or at least one error message on the basis of the similarity value (S7).

2. Method according to Claim 1, wherein the at least one preceding state data record (20) is stored in a storage unit.

3. Method according to Claim 1 or Claim 2, wherein the similarity value is determined on the basis of a distance metric, in particular a Euclidean distance or a Manhattan metric.

4. Method according to one of the preceding claims, wherein the simulation is a physical simulation.

5. Method according to one of the preceding claims, wherein the at least one alternative preceding state data record (30) is determined by varying at least one variable.

6. Method according to Claim 5, wherein the at least one variable is varied in at least one interval.

7. Method according to Claim 6, wherein the variation of the at least one variable takes into account a density distribution.

8. Method according to one of the preceding claims, also comprising the treatment of the cause of the at least one deviation.

9. Method according to Claim 8, wherein the treatment of the cause of the at least one deviation comprises
- transmitting the cause to another unit; and/or
- carrying out a measure.

10. Method according to Claim 9, wherein the cause is transmitted in the form of a message or a notification.

11. Method according to Claim 9 or Claim 10, wherein the measure is an adaptation or a setting.

12. Autonomous automation and robotics unit which is designed to carry out the method according to one of the preceding claims.

13. Computer program product having a computer program which has means for carrying out the method according to one of Claims 1 to 11 when the computer program is executed on a program-controlled device.

## Revendications

1. Procédé pour une unité autonome d'automatisation et de robotique pour l'analyse d'une cause d'au moins une anomalie, comprenant les étapes suivantes :
a. réception d'un ensemble de données d'état à analyser (10), qui comprend des données de l'unité autonome, comprenant l'au moins une anomalie (S1) ;
b. détermination d'au moins un ensemble de données d'état précédent (20, S2) ;
**caractérisé par**
c. la détermination d'une pluralité d'ensembles de données d'état alternatifs (30) sur la base de l'au moins un ensemble de données d'état précédent (20, S3) ;
d. la détermination d'un ensemble de données simulé (40) par la simulation de l'état de l'unité autonome jusqu'au moment présent à partir de chacun de la pluralité des ensembles de données d'état précédents alternatifs (30, S4) ;
e. la comparaison des ensembles de données simulés (40) avec l'ensemble de données d'état à analyser (10, S5) ;
f. la détermination d'une valeur de similarité entre chacun des ensembles de données simulés (40) et l'ensemble de données d'état à analyser (10, S6) ; et
g. la sortie de l'ensemble de données simulé (40) qui est le plus similaire à l'ensemble de données d'état à analyser, de l'ensemble de données d'état précédent alternatif de la pluralité des ensembles de données d'état précédents alternatifs (30), à partir duquel l'ensemble de données simulé sorti provient, en tant que cause de l'au moins une anomalie ou d'au moins un message d'erreur en fonction de la valeur de similarité (S7).

2. Procédé selon la revendication 1, dans lequel l'au moins un ensemble de données d'état précédent (20) est enregistré dans une unité de mémoire.

3. Procédé selon la revendication 1 ou la revendication 2, dans lequel la valeur de similarité est déterminée sur la base d'une métrique de distance, plus particulièrement une distance euclidienne ou une métrique de Manhattan.

4. Procédé selon l'une des revendications précédentes, dans lequel la simulation est une simulation physique.

5. Procédé selon l'une des revendications précédentes, dans lequel la détermination de l'au moins un ensemble de données d'état précédent alternatif (30) a lieu en faisant varier au moins une variable.

6. Procédé selon la revendication 5, dans lequel la variation de l'au moins une variable a lieu dans au moins un intervalle.

7. Procédé selon la revendication 6, dans lequel la variation de l'au moins une variable prend en compte une répartition de densité.

8. Procédé selon l'une des revendications précédentes, comprenant en outre le traitement de la cause de l'au moins une anomalie.

9. Procédé selon la revendication 8, dans lequel le traitement de la cause de l'au moins une anomalie comprend
- la transmission de la cause à une autre unité ; et/ou
- l'application d'une mesure.

10. Procédé selon la revendication 9, dans lequel la cause est transmise sous la forme d'un message ou d'une notification.

11. Procédé selon la revendication 9 ou la revendication 10, dans lequel la mesure est une adaptation ou un réglage.

12. Unité autonome d'automatisation et de robotique qui est conçue pour l'exécution du procédé selon l'une des revendications précédentes.

13. Produit de programme informatique avec un programme informatique qui comprend des moyens d'exécution du procédé selon l'une des revendications 1 à 11, lorsque le programme informatique est exécuté sur un dispositif contrôlé par un programme.
